# EUROPÄISCHE PATENTSCHRIFT

(11) **EP 0 582 799 B1**
(45) Veröffentlichungstag und Bekanntmachung des Hinweises auf die Patenterteilung: **11.11.1998**
(21) Anmeldenummer: 93108978.3
(22) Anmeldetag: 04.06.1993
(51) Int. Cl.: A23L 2/52, A23L 1/308, A23L 1/10, A23L 1/105

(54) **Ballaststoffhaltiges Getränk enthaltend Getreidefasern**
Ballast material containing beverage containing cereal fibres
Boisson lestée comprenant des fibres de céréales

(30) Priorität: 08.08.1992 DE 4226245
(43) Veröffentlichungstag der Anmeldung: 16.02.1994
(73) Patentinhaber: Döhler GmbH, D-64295 Darmstadt (DE)
(72) Erfinder: Tretzel, Joachim, Dr., D-6100 Darmstadt (DE)
(74) Vertreter: Meyers, Hans-Wilhelm, Dr.Dipl.-Chem.

(56) Entgegenhaltungen:
- EP-A- 0 194 060
- EP-A- 0 319 726
- EP-A- 0 440 586
- WO-A-90/10392
- WO-A-91/03543
- FR-A- 1 328 070
- US-A- 4 784 861

## Beschreibung

Die Erfindung betrifft ein ballaststoffhaltiges Getränk, das unlösliche Getreideballaststoffe enthält, ein wäßriges Ballaststoffkonzentrat für dieses Getränk, das Verfahren zur Herstellung des Konzentrats und die Verwendung von Getreidefasern zur Herstellung von ballaststoffhaltigen Getränken.

Es ist bekannt, daß die Bevölkerung in Industrieländern im allgemeinen einerseits zu viel, zu fett und zu süß ißt sowie andererseits zu wenig Ballaststoffe verzehrt. Erhebungen in der Bundesrepublik haben ergeben, daß der mittlere tägliche Ballaststoffverzehr 22 g bei Frauen und 25 g bei Männern ausmacht. Die deutsche Gesellschaft für Ernährung (DGE) empfiehlt jedoch einen täglichen Ballaststoffverzehr, der mindestens 30 g betragen sollte.

Neben festen und teigigen ballaststoffhaltigen Nahrungsmitteln werden dem Verbraucher auch zunehmend ballaststoffhaltige flüssige Nahrungsmittel angeboten, deren Ballaststoffgehalt vorwiegend von Fruchtfasern und fruchtstämmigen Pektinen stammt. Fruchtstämmige Ballaststoffe können jedoch den Nachteil haben, daß frühzeitig ein Sättigungsgefühl hervorgerufen wird oder Stoffwechselbeeinflussungen auftreten, die bis heute noch nicht vollständig aufgeklärt sind.

Bekannt sind inzwischen auch ballaststoffhaltige Getränke mit getreidestämmigen Ballaststoffen, von denen spezifische physiologische Wirkungen, wie Stuhlmobilisierung, Erhöhung des Stuhlgewichts und gesteigerte Stuhlentleerungsfrequenz ausgehen.

Die DE 37 41 991 beschreibt einen Keimgetreidetrunk, bei dem der eingesetzte Getreiderohstoff zur verstärkten Vitaminsynthese zunächst gekeimt und danach gemaischt wird, wobei auf Kochstufen im Maischprozeß und im weiteren Herstellungsverfahren verzichtet wird, um die Vitamine nicht zu zerstören.

Anschließend wird die erhaltene Maische mit einer Milchsäurekultur bis zu einem Absinken des pH-Wertes auf 4,0 bis 3,7 vergoren. Gröbere Getreidepartikel werden mittels Filter o.ä. aus der milchsauren Getreidemaische abgetrennt, mechanisch oder enzymatisch aufgeschlossen und danach dem Ausgangsprodukt wieder zugesetzt. Der Keimgetreidetrunk, der gemäß DE 37 41 991 aus allen sieben Getreidearten hergestellt werden kann, weist einen Gesamtballaststoffgehalt bis zu 15 g/l auf.

JP-A-3175951 beschreibt die Herstellung von unlöslichen, eßbaren, partiell enzymatisch hydrolysierten Getreidefasern aus Getreideschalen, durch Behandlung mit einer Hemicellulase und ihre Verwendung zur Herstellung von Getränken, Suppen, Kuchen etc. Die unlöslichen Getreidefasern werden als trockenes Ballaststoffkonzentrat offenbart. Als Getreidearten werden Mai, Weizen, Reis, Sojabohnen eingesetzt.

WO-A-90/10392 beschreibt ein Verfahren zur Herstellung cellulosehaltiger Feinfasern, die als Roh- oder Ausgangsmaterial für die Nahrungsmittel- und Tiernahrungsmittelindustrie bestimmt sind. Ferner wird beschrieben, daß Fasern, die aus Getreideprodukten erhalten werden, mit Cellulase und Hemicellulase, β-Glucanase, Pectinase, enzymatisch behandelt werden.

Die US-A-5,061,497 beschreibt ein Getreidenahrungsmittel und ein Verfahren zu seiner Herstellung. Das Nahrungsmittel hat einen hohen Ballaststoff- und Proteingehalt und besitzt eine nicht-süße Dextrinbeschichtung, welche den Geschmack verbessert. Bei dem beschriebenen Verfahren wird das Getreidekorn enzymatisch aufgeschlossen und die Stärkeanteile entfernt.

Aufgabe der Erfindung ist es, ein hochballaststoffhaltiges Getränk zur Verfügung zu stellen, dessen unlöslicher Ballaststoffgehalt zu einem großen Teil aus Getreide stammt, um dessen spezifisch physiologische Wirkungen auszunutzen. Der Gesamtballaststoffgehalt soll pro Liter Fertiggetränk bis zu 30 g betragen, was bereits dem empfohlenen täglichen Ballaststoffverzehr entspricht. Daneben soll das Getränk selbstverständlich wohlschmeckend und gut trinkbar sowie kostengünstig und einfach herstellbar sein. Außerdem soll es möglich sein, für dieses Getränk ein lager- und transportfähiges Konzentrat herzustellen, dessen Verdünnung erst beim Abfüller erfolgen kann.

Diese Aufgabe wird überraschend einfach dadurch gelöst, daß bestimmte Getreidederivate, vorzugsweise Rest- oder Abfallprodukte aus der Getreideverarbeitung, als billige und in großen Mengen verfügbare Quelle unlöslichen getreidestämmigen Ballaststoffs eingesetzt und durch enzymatische Behandlung geschmacklich akzeptabel aufbereitet werden.

Gegenstand der Erfindung ist somit ein ballaststoffhaltiges Getränk gemäß Anspruch 1, das bis zu 10 g/l Getreidefasern enthält. Bevorzugt werden als Getreidefasern Gerstenmalzspelzen (Malztreber) als ein Abfallprodukt der Bierbereitung oder Haferkleie eingesetzt. Es ist ohne weiteres möglich, diesen getreidestämmigen Ballaststoffanteil durch fruchtstämmige Ballaststoffe löslicher und/oder unlöslicher Art zu ergänzen, um auch das Wirkungsspektrum dieser Stoffe im Getränk mit anzubieten und den Gesamtballaststoffgehalt bis auf 30 g/l zu erhöhen. Daneben können zusätzlich Saftanteile, Aromen, Vitamine und/oder Mineralien zugesetzt werden, so daß man zum Beispiel auf eine Vitaminerzeugung durch den Keimprozeß nicht angewiesen ist.

Der Gehalt an löslichen und unlöslichen Ballaststoffen der erfindungsgemäßen Getränke wurde analytisch nach der gebräuchlichen AOAC-Methode ermittelt ("Getreide, Mehl und Brot`", 42 , 297-305, 1988).

Zur Beseitigung des störenden kratzigen Mundgefühls der Getreidefasern werden diese enzymatisch oberflächen hydrolisiert, wodurch eine hoch wasseraufnahmefähige und schleimige Oberfläche der Fasern erreicht wird, und damit gleichzeitig auch ihre Suspendierbarkeit in Wasser verbessert wird. Für die partielle enzymatische Hydrolyse werden cellulase- und/oder hemicellulaseaktive Enzympräparate in einem Konzentrationsbereich von 0,1 bis 1,5 %, bezogen auf das Trockengewicht der Fasern, eingesetzt.

Zur Herstellung eines wäßrigen Ballaststoffkonzentrates gemäß Anspruch 4 wird eine wäßrige Suspension aus einem trockenen Faseranteil von 10 bis 15 Gew.-%, bezogen auf das Gesamtgewicht des Konzentrats, hergestellt und erwärmt. Nach Zugabe des Enzympräparates wird das Reaktionsgemisch bei 50 bis 55°C für 4 bis 5 Stunden unter Rühren bei schwach saurem pH-Wert inkubiert, danach wird es homogenisiert und zur werden unter den Bedingungen gemäß Anspruch 7 durchgeführt. Nach Pasteurisieren und aseptischer Abfüllung sind die Konzentrate lagerstabil.

Die Ausgiebigkeiten der erfindungsgemäßen Konzentrate betragen zwischen 300 und 500 g Konzentrat pro Liter Fertiggetränk. Diese Ausgiebigkeiten können sich beispielsweise auf eine fertige Mischung aus Getreidefasern und Fruchtsaftkonzentraten und Pürees mit oder ohne zugesetzten fruchtstämmigen Ballaststoffen löslicher und/oder unlöslicher Art beziehen.

Gegenstand der Erfindung ist weiterhin die Verwendung von enzymatisch oberflächenhydrolisierten Getreidefasern, insbesondere von Gerstenmalzspelzen oder Haferkleie, zur Herstellung von ballaststoffhaltigen Getränken.

Nachfolgend wird die Erfindung näher erläutert, ohne sie darauf einzuschränken.

### BEISPIEL

Herstellung eines wäßrigen Ballaststoffkonzentrates für ein Getränk mit 10 g/l Gerstenmalzspelzen.

150 g getrocknete und gemahlene Spelzen werden in 849,3 g Wasser suspendiert, und die Suspension wird auf 50 bis 55°C erwärmt. Nach Zugabe von 0,7 g Hemicellulase (EL - No 138-91, Röhm GmbH, Darmstadt) wird das Reaktionsgemisch bei 50 bis 55°C ca. 4 bis 5 Stunden unter Rühren bei einem pH-Wert von 3,5 ± 0,2 inkubiert, danach mit einem Druck von 200 - 250 bar zweimal homogenisiert und anschließend bei 92°C pasteurisiert.

Das aus diesem Konzentrat hergestellte Getränk enthält bei einer Dosage von 66.67:T 10 g/l Gerstenmalzspelzen.

### Bezugsbeispiel das nicht unter den Schutzumfang der verliegenden Patentansprüche fällt

60 g getrocknete und gemahlene Haferkleie (Hafer-Rohfasern) werden in 915 g Wasser suspendiert, und die Suspension auf 50 bis 55°C erwärmt. Nach Zugabe von 0,7 g des Enzyms gemäß Beispiel 1 wird 4 Stunden bei 50 bis 55°C gerührt, der pH-Wert mit kristalliner Zitronensäure auf pH 3,5 eingestellt und anschließend bei 92°C pasteurisiert.

Das aus diesem Konzentrat hergestellte Fertiggetränk enthält bei einer Dosage von 175:T 11 g/l Hafer-Rohfasern.

Zur Verbesserung der Geschmackseigenschaften können diesen Ballaststoffkonzentraten aus Getreide noch andere Konzentrate zugemischt werden, zum Beispiel Fruchtsaftkonzentrate oder Pürees mit oder ohne zugesetzten fruchtstämmigen Ballaststoffen in löslicher und unlöslicher Art, die den Ballaststoffgehalt im Fertiggetränk weiter erhöhen können.

## Patentansprüche

1. Wäßriges Ballaststoffkonzentrat aus Getreide zur Herstellung von Getränken, erhältlich indem eine wäßrige Suspension von 10 bis 15 Gew.-%, bezogen auf das Gesamtgewicht des Konzentrats, getrockneter und gemahlener Getreidefasern mit 0,1 bis 1,5 %, bezogen auf das Trockengewicht der Fasern, eines cellulase- und/oder hemicellulaseaktiven Enzympräparates bei 50 bis 55°C für 4 bis 5 Stunden unter Rühren bei schwach saurem pH-Wert inkubiert wird, danach das Reaktionsgemisch homogenisiert und anschließend pasteurisiert wird.

2. Ballaststoffkonzentrat gemäß Anspruch 1, dadurch gekennzeichnet, daß die Getreidefasern Gerstenmalzspelzen (Malztreber) oder Haferkleie sind.

3. Ballaststoffkonzentrat gemäß Anspruch 1 oder 2, dadurch gekennzeichnet, daß das ein- oder mehrmalige Homogenisieren des Reaktionsgemisches in einem Homogenisator oder einer Kolloidmühle bei 200 bis 250 bar und das anschließende Pasteurisieren bei 90 bis 93°C durchgeführt wird.

4. Verfahren zur Herstellung eines wäßrigen Ballaststoffkonzentrats dadurch gekennzeichnet, daß eine wäßrige Suspension von 10 bis 15 Gew.-%, bezogen auf das Gesamtgewicht des Konzentrats, getrockneter und gemahlener Getreidefasern mit 0,1 bis 1,5 %, bezogen auf das Trockengewicht der Fasern, eines cellulase- und/oder hemicellulaseaktiven Enzympräparates bei 50 bis 55°C für 4 bis 5 Stunden unter Rühren bei schwach saurem pH-Wert inkubiert wird, danach das Reaktionsgemisch homogenisiert und anschließend pasteurisiert wird.

5. Verfahren gemäß Anspruch 4, dadurch gekennzeichnet, daß das ein- oder mehrmalige Homogenisieren des Reaktionsgemisches in einem Homogenisator oder einer Kolloidmühle bei 200 bis 250 bar und das anschließende Pasteurisieren bei 90 bis 93°C durchgeführt werden.

6. Ballaststoffhaltiges Getränk, das ein Ballaststoffkonzentrat gemäß den Ansprüchen 1 bis 3 enthält und bis zu 30 g/l Gesamtballaststoffgehalt und bis zu 10 g/l Getreidefasern als unlösliche Ballaststoffe aufweist.

## Claims

1. An aqueous roughage concentrate made from cereals for the preparation of drinks, obtainable by incubating an aqueous suspension of from 10 to 15% by weight, based on the total weight of the concentrate, of dried and milled cereal fibers together with from 0.1 to 1.5%, based on the dry weight of the fibers, of an enzyme preparation having cellulase and/or hemicellulase activity with stirring at a slightly acidic pH value at 50 to 55°C for 4 to 5 hours, followed by homogenizing and subsequently pasteurizing the reaction mixture.

2. The roughage concentrate according to claim 1, characterized in that said cereal fibers are barley malt husks or oat bran.

3. The roughage concentrate according to claims 1 or 2, characterized in that the one or more steps of homogenizing the reaction mixture are effected in a homogenizer or in a colloid mill at from 200 to 250 bar, and said subsequent pasteurizing is effected at from 90 to 93°C.

4. A process for the preparation of an aqueous roughage concentrate, characterized by incubating an aqueous suspension of from 10 to 15% by weight, based on the total weight of the concentrate, of dried and milled cereal fibers together with from 0.1 to 1.5%, based on the dry weight of the fibers, of an enzyme preparation having cellulase and/or hemicellulase activity with stirring at a slightly acidic pH value at 50 to 55°C for 4 to 5 hours, followed by homogenizing and subsequently pasteurizing the reaction mixture.

5. The process according to claim 4, characterized in that the one or more steps of homogenizing the reaction mixture are effected in a homogenizer or in a colloid mill at from 200 to 250 bar, and said subsequent pasteurizing is effected at from 90 to 93°C.

6. Roughage-containing beverage containing a roughage concentrate according to claims 1 to 3, having a total roughage content of up to 30 g/l, and containing up to 10 g/l of cereal fibers as insoluble roughage.

## Revendications

1. Concentré aqueux de matières inertes, obtenu à partir de céréales, pour la fabrication de boissons, qu'on peut obtenir en faisant incuber une suspension aqueuse de 10 à 15 % en poids, par rapport au poids total du concentré, de fibres de céréales séchées et broyées, avec 0,1 à 1,5 %, par rapport au poids net des fibres, d'une préparation d'enzyme ayant une activité de cellulase et/ou d'hémicellulase, à une température de 50 à 55°C, pendant 4 à 5 heures, sous agitation, à pH faiblement acide, puis en homogénéisant le mélange de réaction, et, ensuite, en le pasteurisant.

2. Concentré de matières inertes selon la revendication 1, caractérisé en ce que les fibres de céréales sont des enveloppes de malt d'orge (drêches de malt) ou du son d'avoine.

3. Concentré de matières inertes selon la revendication 1 ou 2, caractérisé en ce qu'on effectue une ou plusieurs homogénéisations du mélange de réaction dans un homogénéisateur ou dans un moulin à colloïdes, à une pression de 200 à 250 bars, et on effectue la pasteurisation subséquente à une température de 90 à 93°C.

4. Procédé de fabrication d'un concentré aqueux de matières inertes, caractérisé en ce qu'on fait incuber une suspension aqueuse de 10 à 15 % en poids, par rapport au poids total du concentré, de fibres de céréales séchées et broyées, avec 0,1 à 1,5 %, par rapport au poids net des fibres, d'une préparation d'enzyme ayant une activité de cellulase et/ou d'hémicellulase, à une température de 50 à 55°C, pendant 4 à 5 heures, sous agitation, à pH faiblement acide, ensuite, on homogénéise le mélange de réaction, et, ensuite, on le pasteurise.

5. Procédé selon la revendication 4, caractérisé en ce qu'on effectue une ou plusieurs homogénéisations du mélange de réaction dans un homogénéisateur ou dans un moulin à colloïdes, à une pression de 200 à 250 bars, et on effectue la pasteurisation subséquente à une température de 90 à 93°C.

6. Boisson contenant des matières inertes, contenant un concentré de matières inertes selon les revendications 1 à 3 et jusqu'à 30 g/l de matières inertes totales et jusqu'à 10 g/l de fibres de céréales en tant que matières inertes insolubles.
